# EUROPEAN PATENT APPLICATION

(11) **EP 3 852 346 A1**
(43) Date of publication of application: **21.07.2021**
(21) Application number: 19860494.4
(22) Date of filing: 12.09.2019
(51) Int. Cl.: H04L 29/14, G06F 21/55

(54) **COMMUNICATION CONTROL DEVICE**

(30) Priority: 14.09.2018 JP 2018172126
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: HATANAKA, Issei, Kawasaki-shi, Kanagawa 212-0013 (JP)
(74) Representative: Hoffmann Eitle
(86) International application number: PCT/JP2019/035962
(87) International publication number: WO 2020/054818

(57) **Abstract**

According to an embodiment, a communication control device is connected between a device and a network, and it includes a first communication unit, a second communication unit, and a controller. The first communication unit transmits and receives data to and from the device. The second communication unit transmits and receives data to and from the network. The controller receives data from the device via the first communication unit and determines based on the data whether the device is under attack. When it is determined that the device is under attack, the controller blocks communications with the network and acquires attack information regarding the attack on the device from the device via the first communication unit.

## Description

### FIELD

Embodiments described herein relate generally to a communication control device.

### BACKGROUND

Some communication control devices bridge communications between a client device such as an IoT device and a network such as the Internet. Such communication control devices block communications with the network when they detect that the client device is under attack from, for example, a computer virus.

Conventional communication control devices have the problem that they cannot acquire information about an attack from a client device.

### CITATION LIST

PATENT LITERATURE 1: Jpn. Pat. Appln. KOKAI Publication No. 2014-103503

### SUMMARY

To solve the above problem, a communication control device capable of acquiring information about an attack from a client device is provided.

According to an embodiment, a communication control device is connected between a device and a network, and it includes a first communication unit, a second communication unit, and a controller. The first communication unit transmits and receives data to and from the device. The second communication unit transmits and receives data to and from the network. The controller receives data from the device via the first communication unit and determines based on the data whether the device is under attack. When it is determined that the device is under attack, the controller blocks communications with the network and acquires attack information regarding the attack on the device from the device via the first communication unit.

### BRIEF DESCRIPTION OF THE DRAWINGS

FIG. 1 is a block diagram showing a configuration example of a communication control system according to an embodiment.
FIG. 2 is a block diagram showing a configuration example of a server device and a client device according to the embodiment.
FIG. 3 is a block diagram showing a configuration example of a communication control device according to the embodiment.
FIG. 4 is a flowchart illustrating an operation example of the communication control device according to the embodiment.

### DETAILED DESCRIPTION

Hereinafter, a communication control system according to an embodiment will be described with reference to the accompanying drawings.

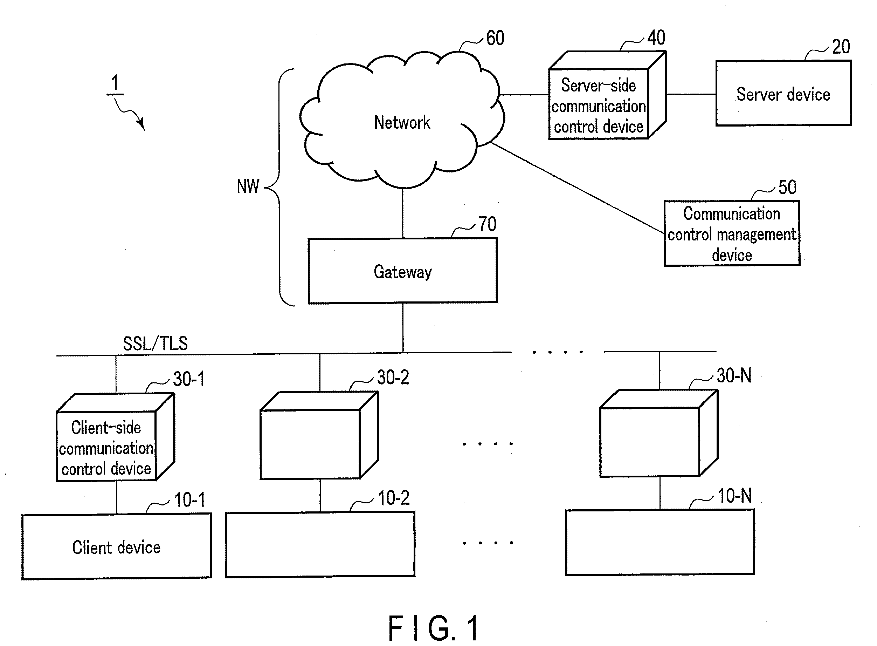

FIG. 1 is a diagram showing a configuration example of a communication control system 1 according to an embodiment. The communication control system 1 includes a client device 10 (10-1 to 10-N), a server device 20, a client-side communication control device 30 (30-1 to 30-N), a server-side communication control device 40, a communication control management device 50, a network 60, and a gateway 70.

The communication control system 1 may include another structural element as necessary in addition to the elements shown in FIG. 1, or it may exclude a specific element.

In the description below, the network 60 and the gateway 70 that connects the network 60 to the client device 10, etc. may be collectively referred to as a "network NW".

The client device 10 is connected to the network NW via the client-side communication control device 30. The client device 10 transmits and receives data to and from the server device 20, etc. through the network NW. The client device 10 will be described later.

The server device 20 is connected to the network NW via the server-side communication control device 40. The server device 20 manages the client device 10. For example, the server device 20 transmits various commands to the client device 10. Further, the server device 20 receives various data from the client device 10. The server device 20 will be described later.

The client-side communication control device 30 is connected between the client device 10 and the network NW, and it bridges communications between the client device 10 and the server device 20. The client-side communication control device 30 acquires data transmitted from the client device 10 to the server device 20 and outputs the acquired data to the server device 20. When transmitting data to the server device 20, the client-side communication control device 30 may encrypt the data acquired from the client device 10 and transmit the encrypted data to the server device 20.

Further, the client-side communication control device 30 acquires data transmitted from the server device 20 to the client device 10 and outputs the acquired data to the client device 10. The client-side communication control device 30 may acquire, for example, encrypted data. If this is the case, when outputting data to the client device 10, the client-side communication control device 30 decrypts the data acquired from the server device 20 via the server-side communication control device 40 and outputs the decrypted data to the client device 10.

The server-side communication control device 40 is connected between the server device 20 and the network NW, and it bridges communications between the client device 10 and the server device 20. The server-side communication control device 40 acquires data transmitted from the server device 20 to the client device 10 and transmits the acquired data to the client device 10. When transmitting data to the client device 10, the server-side communication control device 40 may encrypt the data acquired from the server device 20 and transmit the encrypted data to the client device 10.

Further, the server-side communication control device 40 acquires data transmitted from the client device 10 to the server device 20 and outputs the acquired data to the server device 20. The server-side communication control device 40 may acquire, for example, encrypted data. If this is the case, when outputting data to the server device 20, the server-side communication control device 40 decrypts the data acquired from the client device 10 via the client-side communication control device 30 and outputs the decrypted data to the server device 20.

In the embodiment, the client-side communication control device 30 and the server-side communication control device 40 perform data encryption in accordance with, for example, a Secure Socket Layer (SSL) /Transport Layer Security (TLS) protocol. For example, using the SSL/TLS protocol in combination with HTTP, the client-side communication control device 30 and the server-side communication control device 40 encrypts data included in HTTP and transmits the data in security-improved HTTP Secure (HTTPS).

The data encryption performed by the client-side communication control device 30 and the server-side communication control device 40 is not limited to using HTTPS in place of HTTP. The client-side communication control device 30 and the server-side communication control device 40 may use other security-improved communication protocols provided by combining the SSL/TLS protocol with various communication protocols. For example, the client-side communication control device 30 and the server-side communication control device 40 may use File Transfer Protocol Secure (FTPS) in place of File Transfer Protocol (FTP).

The communication control management device 50 manages the client-side communication control device 30, the server-side communication control device 40, and other devices. For example, the communication control management device 50 issues a client certificate, a secret key, and the like to the client-side communication control device 30. Further, the communication control management device 50 issues a server certificate, a secret key, and the like to the server-side communication control device 40.

Next, configurations of the client device 10 and the server device 20 will be described. For example, the client device 10 and the server device 20 are components constituting a social infrastructure system. A social infrastructure refers to facilities necessary to organize the foundations of society, such as road traffic networks, power-generating facilities, power transmission facilities, water treatment facilities, and gas distribution facilities. The social infrastructure system is, for example, a system for causing such a social infrastructure to operate in a stable manner by monitoring the social infrastructure, ascertaining a change of situation, and dealing with the change. Hereinafter, reference will be made to an example in which the client device 10 and the server device 20 are components of a monitoring system that monitors roads or other public facilities. In this case, the client device 10 is a device (network monitoring camera) that transmits image data of a road condition or the like through the network NW. The server device 20 is a device that receives the image data transmitted from the client device 10 through the network NW.

The client device 10 and the server device 20 are not limited to components of such a monitoring system. For example, the client device 10 and the server device 20 may be components of a system for monitoring a power condition in a power-generating facility or in a power transmission facility. Furthermore, the client device 10 and the server device 20 may be components of a system for acquiring a shipping situation in a distribution center, or they may be components of a system for acquiring an operational status of facilities in a factory or in a research institution.

The system in which the client device 10 and the server device 20 are used is not limited to a specific system, or the functions of the client device 10 and the server device 20 are not limited to specific functions.

Next, the client device 10 and the server device 20 will be described.

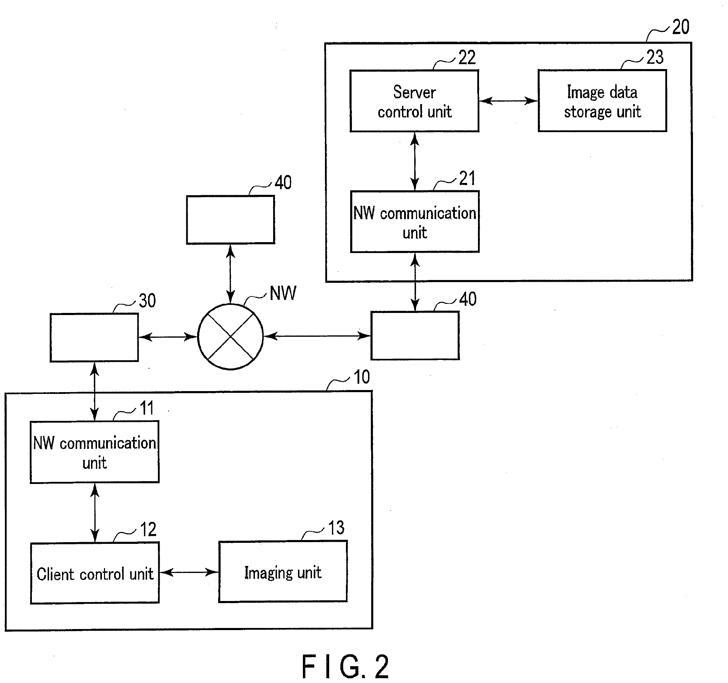

FIG. 2 is a block diagram showing a configuration example of the client device 10 and the server device 20.

As shown in FIG. 2, the client device 10 includes a network communication unit 11, a client control unit 12, and an imaging unit 13. The client control unit 12 is communicably connected to the network communication unit 11 and the imaging unit 13. The client device 10 may include another structural element as necessary in addition to the elements shown in FIG. 2, or it may exclude a specific element.

The network communication unit 11 is an interface for transmitting and receiving data to and from the client-side communication control device 30. The network communication unit 11 is connected to the client-side communication control device 30. The network communication unit 11 outputs data transmitted from the client control unit 12 to the server device 20 to the client-side communication control device 30. Further, the network communication unit 11 outputs data received from the client-side communication control device 30 to the client control unit 12. The network communication unit 11 supports, for example, a LAN connection.

The client control unit 12 comprehensively controls the client device 10. For example, under the control of the server device 20, the client control unit 12 causes the imaging unit 13 to start or stop imaging and sets imaging conditions, such as a direction of a camera used for imaging and a magnification at the time of imaging, on the imaging unit 13.

The client control unit 12 includes a processor, etc. For example, the client control unit 12 may include a memory in addition to the processor. Also, the client control unit 12 may include an application specific integrated circuit (ASIC) or a field-programmable gate array (FPGA).

The imaging unit 13 captures an image of a predetermined point in accordance with an instruction from the client control unit 12. The imaging unit 13 outputs data of the captured image (image data) to the client control unit 12. For example, the imaging unit 13 includes a camera constituted by a charge coupled device (CCD).

The client device 10 may include a unit other than the imaging unit 13. For example, the client device 10 may include various sensors, a light, an air conditioner, a speaker, or a microphone.

The client device 10 may be a desktop PC, a notebook PC, a tablet PC, a smartphone, or a wearable device.

The configuration of the client device 10 is not limited to a specific configuration.

As shown in FIG. 2, the server device 20 includes a network communication unit 21, a server control unit 22, and an image data storage unit 23. The server control unit 22 is communicably connected to the network communication unit 21 and the image data storage unit 23. The server device 20 may include another structural element as necessary in addition to the elements shown in FIG. 2, or it may exclude a specific element.

The network communication unit 21 is an interface for transmitting and receiving data to and from the server-side communication control device 40. The network communication unit 21 is connected to the server-side communication control device 40. The network communication unit 21 outputs data transmitted from the server device 20 to the client device 10 to the server-side communication control device 40. Further, the network communication unit 21 outputs data received from the server-side communication control device 40 to the server control unit 22. The network communication unit 21 supports, for example, a LAN connection.

The server control unit 22 comprehensively controls the server device 20. For example, the server control unit 22 causes the image data storage unit 23 to store image data transmitted from the client device 10. The server control unit 22 includes a processor, etc. For example, the server control unit 22 may include a memory in addition to the processor.

The image data storage unit 23 stores image data in accordance with an instruction from the server control unit 22. The image data storage unit 23 includes a hard disk drive (HDD), a solid state drive (SSD), a flash memory, or the like.

Next, the client-side communication control device 30 will be described.

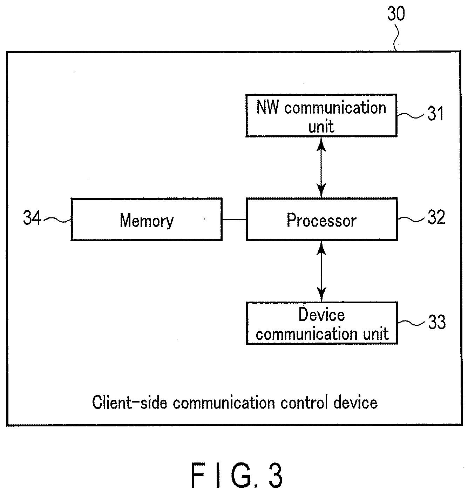

FIG. 3 is a block diagram showing a configuration example of the client-side communication control device 30.

As shown in FIG. 3, the client-side communication control device 30 includes a network communication unit 31 (a second communication unit), a processor 32, a device communication unit 33 (a first communication unit), and a memory 34. The processor 32 is communicably connected to the network communication unit 31 and the device communication unit 33. The client-side communication control device 30 may include another structural element as necessary in addition to the elements shown in FIG. 3, or it may exclude a specific element.

The network communication unit 31 is an interface for transmitting and receiving data to and from the network NW. The network communication unit 31 is connected to the network NW. The network communication unit 31 performs communication with other client-side communication control devices 30 and the server-side communication control device 40 through the network NW. That is, the network communication unit 31 outputs to the network NW data transmitted from the processor 32 to the server device 20. Further, the network communication unit 31 outputs data received from the network NW to the processor 32. The network communication unit 31 supports, for example, a LAN connection.

The processor 32 comprehensively controls the client-side communication control device 30. The processor 32 bridges communications between the client device 10 and the network NW by means of the network communication unit 31 and the device communication unit 33. Specifically, the processor 32 transmits data received from the client device 10 via the device communication unit 33 to the network NW via the network communication unit 31. Further, the processor 32 transmits data received via the network communication unit 31 to the client device 10 via the device communication unit 33.

For example, the processor 32 executes a control program stored in the memory 34 or the like. The processor 32 may include an application specific integrated circuit (ASIC) or a field-programmable gate array (FPGA).

The device communication unit 33 is an interface for transmitting and receiving data to and from the client device 10. The device communication unit 33 is connected to the client device 10 and communicates with the client device 10. Specifically, the device communication unit 33 outputs data received from the processor 32 to the client device 10. Further, the device communication unit 33 outputs data received from the client device 10 to the processor 32. The device communication unit 33 supports, for example, a LAN connection.

The memory 34 stores various data. For example, the memory 34 functions as a ROM, a RAM, and an NVM.

The memory 34 stores, for example, a control program and control data. The control program and the control data are prestored in accordance with specifications of the client-side communication control device 30. The control program is, for example, a program that supports the functions of the client-side communication control device 30.

Further, the memory 34 temporarily stores data that is being processed by the processor 32. The memory 34 may store data necessary for execution of an application program, and a result of executing the application program.

The memory 34 prestores a white list that indicates communications permitted to be used to transfer data to the network NW. The white list includes, for example, a destination, a destination port, a source port, a protocol, or a combination thereof. The white list may indicate periods during which a communication is permitted.

The memory 34 also stores an attack list including attack-specific dictionary information for identifying an attack. For example, the communication control management device 50 transmits the attack list to the client-side communication control device 30. The network communication unit 31 receives the attack list transmitted from the communication control management device 50. The processor 32 causes the memory 34 to store the attack list transmitted from the communication control management device 50. For example, the dictionary information included in the attack list indicates characteristics of an attack, such as an attacking technique and a virus. The dictionary information may be an AI model constructed by learning.

Next, functions of the client-side communication control device 30 will be described. The functions of the client-side communication control device 30 are performed by the processor 32.

First, the processor 32 has a function of determining whether or not the client device 10 is under attack based on data received from the client device 10.

The client device 10 may perform an illegal operation due to an attack by an attacker. For example, the client device 10 is connected to a device (such as a personal computer or a memory) owned by an attacker, and by means of the device, an illegal command or a virus is input to the client device 10. Such an illegal command or virus infection causes the client device 10 to perform an illegal operation. The client device 10 may be infected with a virus or the like through data received from the network NW.

The processor 32 determines whether or not the client device 10 is under attack based on data received from the client device 10 when transferring the data received from the client device 10 to the network NW.

Upon receipt of data from the client device 10, the processor 32 determines whether or not the client device 10 is under attack by referring to the white list stored in the memory 34.
Specifically, when data is transmitted from the client device 10 through a communication other than the communications indicated in the white list, the processor 32 determines that the client device 10 is under attack.

The processor 32 may use artificial intelligence for such a determination. For example, the processor 32 may prestore an AI model for determination and checks data received from the client device 10 against the model to determine whether or not the client device 10 is under attack.

The method of determining whether the client device 10 is under attack is not limited to a specific method.

The processor 32 also has a function of blocking communications with the network NW when it determines that the client device 10 is under attack.

In that case, the processor 32 refrains from transferring data received from the client device 10 to the network NW. Similarly, the processor 32 refrains from transferring data received from the network NW to the client device 10.

In addition, the processor 32 has a function of acquiring information regarding an attack on the client device 10 (attack information) by transmitting and receiving data to and from the client device 10.

The attack information includes, for example, information specific to an attacking device used for an attack or information on the date and time of communication.

The processor 32 maintains communications with the client device 10 even after blocking communications with the network NW. The processor 32 acquires various data from the client device 10 through the communications with the client device 10.

For example, the processor 32 transmits a command for acquiring predetermined information (information acquisition command). The information acquisition command is used to acquire information about the condition, etc. of the client device 10. For example, the information acquisition command is used to acquire information regarding the client device 10 itself, such as the model number or version of the client device 10. The information acquisition command may be used to acquire information regarding the operation of the client device 10, such as information on an application running on the client device 10, information on the usage or temperature of a processor or the like, and information on the memory usage. The information acquisition command may be for acquiring information indicating a device connected to the client device 10 (attacking device-specific information). For example, the information acquisition command is used to acquire information indicating an information processing device connected by an attacker to the client device 10.

The information acquired using the information acquisition command is not limited to specific information.

The processor 32 regards the information acquired using the information acquisition command as attack information. The processor 32 may transmit a plurality of information acquisition commands to the client device 10.

To acquire the attack information, the processor 32 sets up a honeypot as a security measure. The processor 32 constructs for example a system on a virtual platform as a honeypot. Specifically, a honeypot can be constructed by using as-is an OS or an applicationwhose vulnerabilities are known, or by executing a program configured to emulate such an OS, etc. The honeypot is not limited to such high-interaction and low-interaction type honeypots, and various types of honeypots known at the time of commercialization can be used.

The processor 32 transmits dummy data to the client device 10 through the honeypot. For example, the dummy data that the processor 32 transmits to the client device 10 is dummy data disguised as if the communications with the network NW are continuing.

The processor 32 may transmit preset dummy data to the client device 10. The processor 32 may transmit dummy data made by using artificial intelligence. For example, the processor 32 may determine the content, order, etc. of the dummy data by using a predetermined AI model.

After transmitting the data to the client device 10, the processor 32 acquires a behavior of the client device 10 (e.g., data transmitted from the client device 10). The processor 32 acquires information indicating the behavior of the client device 10 as attack information. As such attack information, the processor 32 acquires, for example, the content of the data transmitted from the client device 10, or the date and time of communication.

The processor 32 may update the AI model in response to the behavior of the client device 10.

The processor 32 may acquire the attack information by using either both or one of the information acquisition command and the honeypot. The processor 32 may acquire the attack information by using another method. The method by which the processor 32 acquires the attack information is not limited to a specific method.

In addition, the processor 32 has a function of identifying an attack based on the attack information. Specifically, the processor 32 identifies a technique of attacking the client device 10, a virus with which the client device 10 is infected, or the like based on the attack information.

The processor 32 checks the attack information against each piece of the dictionary information included in the attack list stored in the memory 34. Based on a result of the check, the processor 32 identifies an attack. The processor 32 may transmit information indicating the identified attack to an external device. The processor 32 may store the information indicating the identified attack in the memory 34 or the like.

When the processor 32 fails to identify an attack, it may add new dictionary information for identifying the attack to the attack list. Specifically, the processor 32 generates new dictionary information regarding the unidentified attack on the client device 10 based on the attack information, and registers the new dictionary information in the attack list. Even when the processor 32 succeeds in identifying an attack, it may generate new dictionary information regarding the attack based on the attack information, and register the new dictionary information in the attack list. In this manner, the processor 32 updates the attack list transmitted from the communication control management device 50 by additionally registering the dictionary information in the attack list according to the attack information acquired. The network communication unit 31 transmits the updated attack list to the communication control management device 50. The communication control management device 50 can distribute a new attack list to each client-side communication control device 30.

Further, when the processor 32 fails to identify an attack, it may transmit attack information regarding the attack to the communication control management device 50. The communication control management device 50 can analyze the tendency, etc. of the attack based on attacking device-specific information, communication date and time information, and the like included in the attack information.

Furthermore, the processor 32 has a function of terminating the client device 10 that has been attacked.

For example, the processor 32 transmits a command for shutdown to the client device 10.

The processor 32 may stop a power supply to the client device 10. For example, when the client-side communication control device 30 uses Power of Ethernet (PoE) (registered trademark) to supply power to the client device 10, the processor 32 stops the PoE power supply.

The processor 32 may transmit a command for stopping a power supply to the client device 10 to a power supply unit or the like that supplies power to the client device 10.

The method by which the processor 32 terminates the client device 10 is not limited to a specific method.

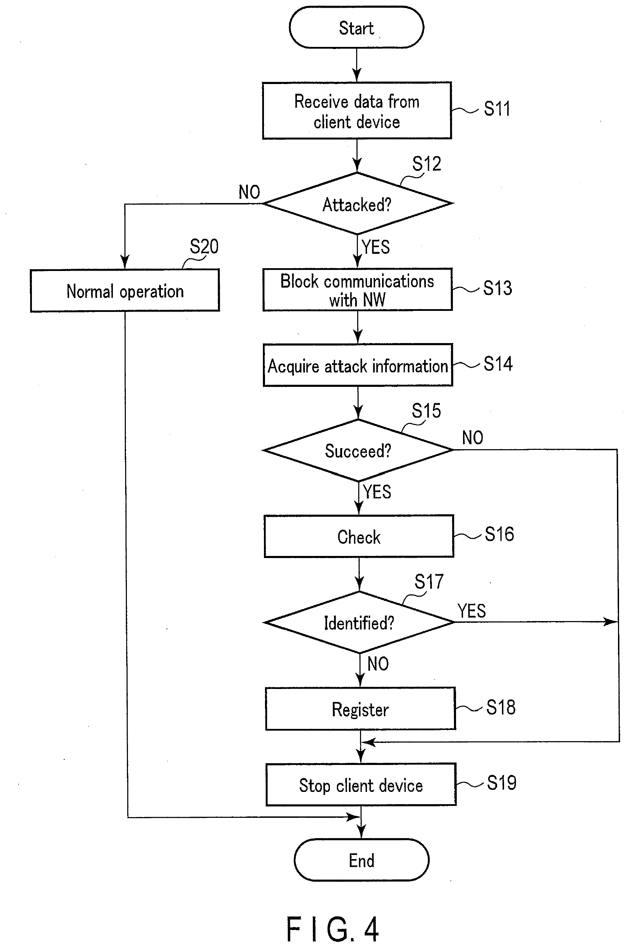

Next, an example of how the client-side communication control device 30 operates will be described. FIG. 4 is a flowchart for explaining an example of how the client-side communication control device 30 operates.

First, the processor 32 of the client-side communication control device 30 receives data from the client device 10 (S11). Upon receipt of the data, the processor 32 determines whether the client device 10 is under attack based on the data (S12).

When it is determined that the client device 10 is under attack (YES in S12), the processor 32 blocks communications with the network NW (S13). After blocking the communications with the network NW, the processor 32 acquires attack information from the client device 10 (S14) .

Upon successful acquisition of the attack information (YES in S15), the processor 32 checks the attack information against dictionary information included in an attack list (S16). After checking the attack information against the dictionary information, the processor 32 determines whether an attack has been identified (S17).

When it is determined that the attack has not been identified (NO in S17), the processor 32 generates new dictionary information based on the attack information and registers it in the attack list (S18). When it is determined that the attack has been identified (YES in S17) or when the new dictionary information is registered in the attack list (S18), the processor 32 terminates the client device 10 (S19).

When it is determined that the client device 10 is not under attack (NO in S12), the processor 32 performs a normal operation (S20). That is, the processor 32 transfers data received from the client device 10 to the network NW.

After terminating the client device 10 (S19) or after performing the normal operation (S20), the processor 32 stops operating.

The processor 32 may terminate the client device 10 after acquiring the attack information.

The communication control system 1 can improve anti-attack performance by sharing, among a plurality of client-side communication control devices 30, an attack list updated by each client-side communication control device 30. As described above, the communication control management device 50 generates a new attack list by analyzing the updated attack list transmitted from each client-side communication control device 30, and distributes the new attack list to each client-side communication control device 30. A client-side communication control device 30 can identify an attack by referring to the new attack list generated by analyzing the attack list updated for the attack by another client-side communication control device 30, and take measures such as terminating the client device 10.

The server-side communication control device 40 may have the same functions as those of the client-side communication control device 30. If this is the case, the server-side communication control device 40 performs the same operations as those of the client-side communication control device 30 on the server device 20.

The client-side communication control device 30 may bridge communications between a plurality of client devices 10 and the network NW. If this is the case, the client-side communication control device 30 performs the same operations on all of the client devices 10.

The client-side communication control device having the above-described configuration blocks communications with a network when it is determined that the client device is under attack. As a result, the client-side communication control device can prevent the client device from illegitimately transmitting data to an external device.

Further, while the client-side communication control device blocks communications with the network, it maintains communications with the client device. The client-side communication control device acquires various data from the client device using the maintained communications. As a result, the client-side communication control device can acquire attack information on an attack while blocking illegitimate data communications.

While some embodiments of the invention have been described, these embodiments have been presented by way of example only, and are not intended to limit the scope of the invention. These novel embodiments may be embodied in various forms, and various omissions, replacements, and changes can be made thereon without departing from the spirit of the invention. The embodiments and their modifications are included in the scope and spirit of the invention and are included in the scope of the claimed inventions and their equivalents.

## Claims

1. A communication control device connected between a device and a network, comprising:
a first communication unit that transmits and receives data to and from the device;
a second communication unit that transmits and receives data to and from the network; and
a controller that receives data from the device via the first communication unit and determines whether the device is under attack based on the data,
wherein
when it is determined that the device is under attack, the controller blocks communications with the network and acquires attack information on the attack from the device via the first communication unit.

2. The communication control device according to claim 1, wherein the controller acquires the attack information by transmitting an information acquisition command via the first communication unit.

3. The communication control device according to claim 2, wherein the attack information that the controller acquires by transmitting the information acquisition command includes information indicating another device connected to the device.

4. The communication control device according to any one of claims 1 to 3, wherein the controller constructs a honeypot to securely acquire the attack information.

5. The communication control device according to claim 4, wherein the controller transmits dummy data to the device through the honeypot.

6. The communication control device according to any one of claims 1 to 5, wherein the controller identifies the attack on the device based on the attack information and an attack list.

7. The communication control device according to claim 6, wherein when the controller fails to identify the attack on the device, the controller registers dictionary information based on the attack information in the attack list.

8. The communication control device according to any one of claims 1 to 7, wherein the controller terminates the device after acquiring the attack information.
